# FASCICULE DE BREVET EUROPEEN

(11) **EP 2 288 871 B1**
(45) Date de publication et mention de la délivrance du brevet: **20.03.2013**
(21) Numéro de dépôt: 09761883.9
(22) Date de dépôt: 12.06.2009
(51) Int. Cl.: G01C 19/5691, G01C 19/56

(54) **CAPTEUR DE ROTATION INERTIEL À DÉRIVE COMPENSÉE**
TRÄGHEITSDREHUNGSSENSOR MIT DRIFTKOMPENSATION
DRIFT-COMPENSATED INERTIAL ROTATION SENSOR

(30) Priorité: 13.06.2008 FR 0803302
(43) Date de publication de la demande: 02.03.2011
(73) Titulaire: SAGEM Défense Sécurité, 75015 Paris (FR)
(72) Inventeur: RAGOT, Vincent, F-75015 Paris (FR)
(74) Mandataire: Lavialle, Bruno François Stéphane
(86) Numéro de dépôt international: PCT/FR2009/000700
(87) Numéro de publication internationale: WO 2009/150332

(56) Documents cités:
- EP-A- 1 541 967
- US-A- 3 656 354
- US-A- 5 817 940
- US-A1- 2003 006 783
- US-B1- 6 467 346

## Description

L'invention concerne un capteur de rotation inertiel à dérive compensée.

### ARRIERE PLAN DE L'INVENTION

On sait qu'un gyromètre vibrant isotrope est constitué d'un résonateur axisymétrique à deux degrés de liberté.

La position de la vibration est repérée par deux détecteurs électrostatiques constitués chacun par un groupe d'électrodes solidaires du boîtier.

Les commandes permettant le contrôle de la vibration sont appliquées par deux moteurs électrostatiques constitués chacun par un groupe d'électrodes solidaires du boîtier.

Le contrôle de la vibration consiste à compenser l'amortissement, annuler l'anisotropie de fréquence et éventuellement modifier l'orientation et/ou la fréquence de la vibration.

Dans le mode gyroscopique, la position de la vibration par rapport au boîtier est partiellement provoquée par la vitesse angulaire appliquée à l'appareil. Dans ce mode de fonctionnement la dérive c'est-à-dire la rotation apparente qui résulte des imperfections de l'appareil dépend de la position de la vibration par rapport au boîtier

Dans la base formée par les deux détecteurs, la vibration peut être caractérisée par ses coordonnées polaires.

L'angle polaire θ est défini à Π près, il en résulte que la dérive du gyroscope est une fonction périodique de θ de période Π.

La dérive du gyroscope peut alors être explicitée sous forme d'une série de Fourier constituée de termes en cos(2nθ) et sin(2nθ), n décrivant l'ensemble des entiers.

La cause principale de dérive moyenne (terme constant de la série de Fourier) est l'indexation des repères détecteurs et des repères moteurs.

Une utilisation des mêmes électrodes en tant que moteurs et actionneurs permet en première approximation de supprimer la dérive moyenne.

Pour que le procédé soit efficace, il faut que l'expression mathématique des gains détecteurs et des gains moteurs soit semblable afin que les défauts de réalisation des détecteurs soient compensés naturellement par les moteurs.

Un exemple de capteur de rotation inertiel à traitement isotrope est divulgué dans le document EP-A-1 541 967. Le capteur qui y est décrit comprend un organe vibrant ayant des parties métallisées en regard formant un condensateur à capacité variable associé par l'intermédiaire d'un organe de multiplexage/démultiplexage à un circuit de traitement agencé pour avoir une phase de fonctionnement en motorisation et une phase de fonctionnement en détection.

Dans les dispositifs connus, la mesure du signal de détection est effectuée en associant à chaque électrode de détection un circuit de charge à haute impédance, c'est-à-dire dont l'impédance d'entrée est très élevée par rapport à l'impédance de sortie de l'électrode de détection correspondante. Dans ce cas le courant débité par l'électrode de détection est voisin de zéro et la tension recueillie aux bornes du circuit de charge est théoriquement une fonction linéaire de la modulation d'entrefer. Or les impédances parasites résultant des défauts de fabrication du capteur de rotation dégradent la linéarité de la réponse du capteur. Pour minimiser cet effet les signaux de détection sont généralement acheminés par des blindages actifs très coûteux et très encombrants. En outre les modulations de champ électrique dans l'entrefer provoquent des pertes électriques dues aux impuretés, ce qui contribue à amortir la vibration de façon variable en fonction de l'orientation de la vibration, et donc de provoquer une dérive qui est elle-même fonction de l'orientation de la vibration par rapport au boîtier.

### OBJET DE L'INVENTION

Un but de l'invention est de minimiser la part de dérive indépendante de la position de la vibration par rapport au boîtier de l'appareil.

### RESUME DE L'INVENTION

En vue de la réalisation de ce but, on propose selon l'invention un capteur inertiel de rotation, selon la revendication 1, comprenant un organe vibrant ayant des parties métallisées en regard formant un condensateur à capacité variable associé par l'intermédiaire d'un organe de multiplexage/démultiplexage à un circuit de commande. Le circuit de commande est agencé pour avoir une phase de fonctionnement en motorisation et une phase de fonctionnement en détection, et pour présenter une basse impédance dans ces deux phases.

Le système de multiplexage autorise une utilisation alternée des électrodes en temps qu'actionneurs (phase de motorisation) et détecteurs (phase de détection). Cette combinaison d'un organe de multiplexage/démultiplexage avec un circuit de commande à basse impédance tant en phase de motorisation qu'en phase de détection assure une compensation de dérive qui élimine automatiquement le terme de dérive indépendant de la position de la vibration par rapport au boîtier de l'appareil.

### BREVE DESCRIPTION DES DESSINS

D'autres caractéristiques et avantages de l'invention apparaîtront à la lecture de la description qui suit d'un mode de réalisation particulier du capteur de rotation inertiel selon l'invention.

Il sera fait référence aux dessins annexés, parmi lesquels :
- la figure 1 est une vue en coupe schématique d'un capteur à résonateur vibrant hémisphérique, conforme à l'invention,
- la figure 2 est un schéma du circuit de traitement associé à ce capteur.

En référence aux figures, le capteur vibrant illustré comporte de façon connue en soi une calotte en matière siliceuse 1 portée par une tige 4 fixée à un socle 3. La surface interne de la calotte 1 ainsi que le bord de celle-ci et la tige 4 sont recouverts d'une couche de métal 2. Le socle 3 porte des électrodes 5. Chaque électrode 5 forme avec le bord métallisé en regard de la calotte 1 un condensateur à capacité variable 6 qui fonctionne alternativement en commande et en détection au moyen d'une chaîne de traitement généralement désigné en 16. La chaîne de traitement 16 comporte un multiplexeur/démultiplexeur 7 associé à un circuit de commande 8 formant circuit de charge. Le circuit de commande 8 comporte une première et une deuxième branche 9.a, 9.b reliant l'organe multiplexeur/démultiplexeur 7 à une unité de traitement 10. L'unité de traitement 10 a une autre borne reliée au bord métallisé de la calotte 1. L'unité de traitement 10 est agencée pour appliquer une tension de polarisation sur l'une des bornes du condensateur, l'autre borne est mise en court-circuit. L'unité de traitement 10 mesure le courant de court-circuit des électrodes.

La première branche 9.a comporte une résistance 11 en série avec l'organe de multiplexage/démultiplexage 7 et l'unité de traitement 10. Un amplificateur 12 est monté en parallèle de la résistance 11 de manière à avoir une entrée inverse reliée à l'organe de multiplexage/démultiplexage 7, une entrée directe reliée à la masse et une sortie reliée à l'unité de traitement 10.

La deuxième branche 9.b comporte une résistance 13 et une résistance 14 en série avec l'organe de multiplexage/démultiplexage 7 et l'unité de traitement 10. Un amplificateur 15 monté en parallèle de la résistance 13 de manière avoir une entrée inverse connectée entre les résistances 13 et 14 pour être reliée à l'unité de traitement 10 via la résistance 14, une entrée directe reliée à la masse et une sortie reliée à l'organe de multiplexage/démultiplexage 7.

Les électrodes 5 sont réparties en deux groupes reliés chacun par une voie 17.1, 17.2 au multiplexeur/démultiplexeur 7.

Selon l'invention, le circuit de commande 8, c'est-à-dire chacune des branches 9a, 9b, est un circuit basse impédance c'est-à-dire qu'il présente une faible impédance par rapport à l'impédance de sortie du condensateur. Plus précisément, le circuit satisfait à la relation R/G « 1/(C ω₀) dans laquelle R est la valeur de la résistance 11, 13 (selon la branche considérée), G est le gain de l'amplificateur 12, 15 (selon la branche considérée), C est la capacité du condensateur variable 6 et ω₀ la pulsation de la vibration à la fréquence de résonance du capteur. Les amplificateur 12, 15 amplifient des tensions et présentent donc une faible impédance.

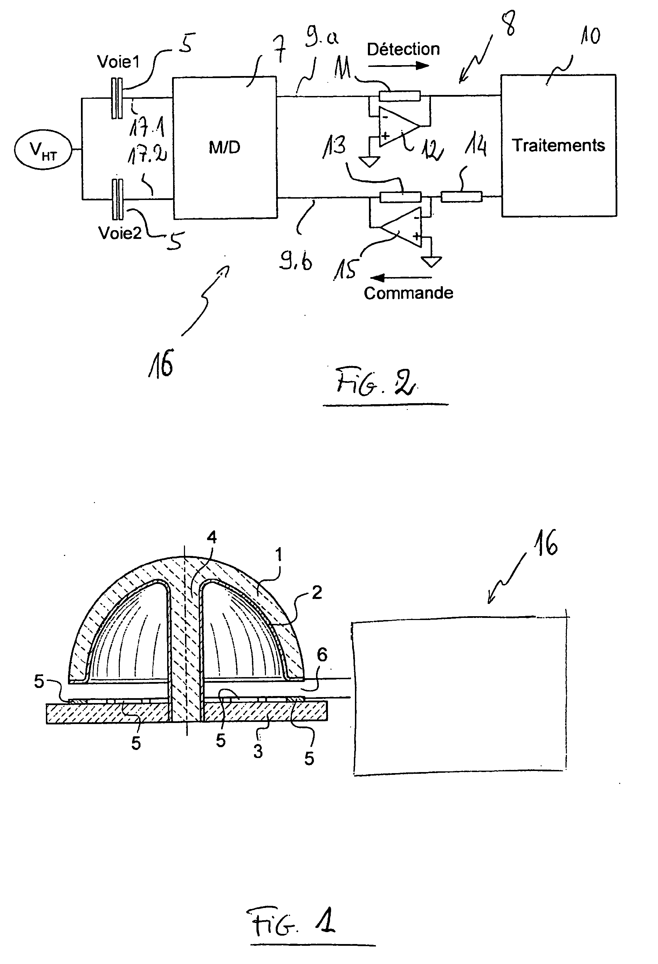

Ainsi, la détection est réalisée pour les deux voies 17.1, 17.2 en utilisant le même circuit, à savoir la branche 9a du circuit de commande 8 et la motorisation (ou commande comme indiqué sur la figure 2) est réalisée pour les deux voies 17.1, 17.2 en utilisant le même circuit, à savoir la branche 9b du circuit de commande 8.

Bien entendu l'invention n'est pas limitée au mode de réalisation illustré et est susceptible de variantes de réalisation qui apparaîtront à l'homme de métier sans sortir du cadre de l'invention telle que définie par la revendication.

En particulier bien que l'invention ait été décrite en relation avec un capteur de rotation inertiel comprenant une calotte vibrante, l'invention s'applique également à tout capteur de rotation comportant des électrodes en regard montées pour réaliser un condensateur à gain variable jouant alternativement le rôle d'actionneur et de détecteur.

Bien que deux exemples de circuit de charge aient été donnés l'invention s'applique également à tout dispositif réalisant un circuit de charge à basse impédance, c'est-à-dire dont l'impédance d'entrée est très faible devant l'impédance de sortie du condensateur variable.

Le bord métallisé de la calotte peut être continu ou discontinu formant des électrodes séparées les unes des autres au niveau du bord (couche conductrice en forme d'araignée s'étendant depuis le pôle de la calotte).

## Revendications

1. Capteur inertiel de rotation comprenant un organe vibrant (1) ayant des parties métallisées (2, 5) en regard formant un condensateur à capacité variable (6) associé par l'intermédiaire d'un organe de multiplexage/démultiplexage (7) à un circuit de commande agencé pour avoir une phase de fonctionnement en motorisation et une phase de fonctionnement en détection, et pour présenter une basse impédance dans ces deux phases, par rapport à l'impédance dudit condensateur à capacité variable.

2. Capteur selon la revendication 1, dans lequel les parties métallisées (5) sont réparties en deux groupes reliés chacun par une voie (17.1, 17.2) à l'organe de multiplexage/démultiplexage (7).

3. Capteur selon la revendication 1 ou 2, dans lequel le circuit de commande (8) comprend une unité de traitement (10) relié à l'organe de multiplexage/démultiplexage (7) par une première branche (9a) et une deuxième branche (9b) ; la première branche comportant une résistance (11) en série avec l'organe de multiplexage/démultiplexage et l'unité de traitement et un amplificateur (12) monté en parallèle de la résistance pour avoir une entrée inverse reliée à l'organe de multiplexage/démultiplexage, une entrée directe reliée à la masse et une sortie reliée à l'unité de traitement ; la deuxième branche comportant une résistance (13) en série avec l'organe de multiplexage/démultiplexage et l'unité de traitement et un amplificateur (15) monté en parallèle de la résistance pour avoir une entrée inverse reliée à l'unité de traitement, une entrée directe reliée à la masse et une sortie reliée à l'organe de multiplexage/démultiplexage.

## Claims

1. An inertial rotation sensor comprising a vibrating member (1) having facing metal-plated portions (2, 5) forming a variable capacitance capacitor (6) associated via a multiplexer/demultiplexer member (7) with a control circuit arranged to have a drive operating stage and a detection operating stage, and to present low impedance in both of these stages compared with the impedance of said variable capacitance capacitor.

2. A sensor according to claim 1, wherein the metal-plated portions (5) are organized in two groups, each connected by a respective channel (17.1, 17.2) to the multiplexer/demultiplexer member (7).

3. A sensor according to claim 1, wherein the control circuit (8) includes a processor unit (10) connected to the multiplexer/demultiplexer member (7) via a first branch (9.1) and a second branch (9.2); the first branch comprising a resistor (11) in series with the multiplexer/demultiplexer member and the processor unit together with an amplifier (12) connected in parallel with the resistor to have an inverting input connected to the multiplexer/demultiplexer member, a non-inverting input connected to ground, and an output connected to the processor unit; the second branch comprising a resistor (13) in series with the multiplexer/demultiplexer member and the processor unit together with an amplifier (15) connected in parallel with the resistor in order to have an inverting input connected to the processor unit, a non-inverting input connected to ground, and an output connected to the multiplexer/demultiplexer member.

## Patentansprüche

1. Trägheits-Rotationssensor, umfassend ein Vibrationsorgan (1) mit einander gegenüberliegenden metallisierten Abschnitten (2, 5), die einen Kondensator mit variabler Kapazität (6) bilden, der durch Vermittlung eines Multiplex/Demultiplex-Organs (7) mit einem Steuerkreis verbunden ist, der so ausgebildet ist, dass er eine Antriebs-Betriebsphase und eine Detektions-Betriebsphase hat, und in diesen beiden Phasen relativ zur Impedanz des Kondensators mit variabler Kapazität eine niedrige Impedanz aufweist.

2. Sensor nach Anspruch 1, bei dem die metallisierten Abschnitte (5) in zwei Gruppen aufgeteilt sind, die jeweils über eine Bahn (17.1, 17.2) an das Multiplex/Demultiplex-Organ (7) angeschlossen sind.

3. Sensor nach Anspruch 1 oder 2, bei dem der Steuerkreis (8) eine Verarbeitungseinheit (10) umfasst, die über einen ersten Zeig (9a) und einen zweiten Zweig (9b) mit dem Multiplex/Demultiplex-Organ (7) verbunden ist; wobei der erste Zweig einen Widerstand (11) in Serie mit dem Multiplex/Demultiplex-Organ und der Verarbeitungseinheit sowie einen parallel zum Widerstand angebrachten Verstärker (12) umfasst, sodass ein invertierender Eingang an das Multiplex/Demultiplex-Organ angeschlossen ist, ein direkter Eingang an die Masse angeschlossen ist und ein Ausgang an die Verarbeitungseinheit angeschlossen ist, und wobei der zweite Zweig einen Widerstand (13) in Serie mit dem Multiplex/Demultiplex-Organ und der Verarbeitungseinheit sowie einen parallel zum Widerstand angebrachten Verstärker (15) umfasst, sodass ein invertierender Eingang mit der Verarbeitungseinheit verbunden ist, ein direkter Eingang mit der Masse verbunden ist sowie ein Ausgang mit dem Multiplex/Demultiplex-Organ verbunden ist.
